# EUROPEAN PATENT APPLICATION

(11) **EP 4 369 124 A1**
(43) Date of publication of application: **15.05.2024**
(21) Application number: 22207294.4
(22) Date of filing: 14.11.2022
(51) Int. Cl.: G05B 19/401, G01B 11/24

(54) **INSPECTION SYSTEM AND METHOD**

(71) Applicant: AM-Flow Holding B.V., 1018 JA Amsterdam (NL)
(72) Inventor: VAN DER SPEK, Jonathan, 1018 JA Amsterdam (NL); RINK, Stefan, 1018 JA Amsterdam (NL); MAY, Gideon, 1018 JA Amsterdam (NL); JANSSEN, Nick, 1018 JA Amsterdam (NL)
(74) Representative: V.O.

(57) **Abstract**

An inspection system (1) for inspecting 3D-objects is disclosed herein. The inspection system (1) comprises a object data capturing system (2; 2a, 2b) for monitoring an object (O1) to provide object data, a reorientating device (3) for reorientating the object (O1) and a controller (5). The controller (5) is configured to subsequently instruct (C2) the object data capturing system (2; 2a) to obtain first object data (Do1,1) in a first orientation (O1,1) of the object (O1), to instruct (C3) the reorientating device (3) to arrange the object (O1) in a second orientation (O1,2) different from the first orientation, to instruct (C4) the object data capturing system (2; 2b) to obtain second object data (Do1,2) from the object (O1) in the second orientation (01,2) and to combine (C5) the first object data (Do1,1) and the second object data (Do1,2) into combined object data (Dol) about the object (O1).

## Description

### BACKGROUND

The present disclosure pertains to an inspection system.

The present disclosure further pertains to an inspection method.

Requirements to modern production processes are that products can be manufactured at high production rates and with a high versatility to optimally meet customer requirements. Production facilities used for this purpose are based on added manufacturing methods, such as 3D-printing, but also other methods may be contemplated. Inspection of the products is even more important than in conventional production environments as it is not possible to rely upon standard production facility settings in order to obtain standard complying products. Instead, production orders for arbitrary 3D products from various customers need to be handled.

Typically, the object to be inspected is not fully visible as it is partly occluded by a support surface, e.g. a conveyor belt that transports the object.

Accordingly, there is a need for improvements to obtain more complete object data.

### SUMMARY

According to a first aspect of the present disclosure, this is achieved with an improved inspection system as claimed in claim 1. The claimed inspection system comprises a object data capturing system to provide object data, a reorientating device for reorientating the object, and a controller.

The controller is configured to subsequently:
instruct the object data capturing system to obtain first object data in a first orientation of the object;
instruct the reorientating device to arrange the object in a second orientation different from the first orientation;
instruct the object data capturing system to obtain second object data (Do1,2) from the object in the second orientation;
combine the first object data and the second object data into combined object data about the object.

In the improved inspection system, the object data capturing system obtains first object data of the object in its first orientation. This can be an original orientation in which the object is conveyed to the object data capturing system. Alternatively, this can be a predetermined reference orientation. After the first object data has been obtained, the reorientating device reorientates the object in a second orientation different from the first orientation. The object data capturing system then obtains second object data from the object in the second orientation. Therewith information of the object is obtained that may be unavailable with the object in its first orientation. Reversely, typically the information available in the first orientation of the object may be partly or fully unavailable in the second orientation. Therewith the step of combining the first object data and the second object data results into combined object data having a higher information content than is possible with a single object data capturing step and therewith contributes to improved control of further steps, such as quality control, redirecting an object for a further process step, etc.

In an embodiment the first object data and the second object data are each provided as a point cloud. Each point of a point cloud specifies a position of the object surface in 3D-space.

A point in a point cloud may specify in addition to its position, comprise further information, such as information about a color, and the like of the object at the position.

In an embodiment the controller is configured to identify shared object data, being a first subset of said first object data and a second subset of said second object data representative for a same part of said object, and to determine an indication for a difference between said first orientation and said second orientation and to use said indication when combining the first object data and the second object data.

In some embodiments of the inspection system the reorientating device comprises a rotatable assembly with a first object conveyor with a first object conveying surface and a second object conveyor with a second object conveying surface, with the first object conveying surface and the second object conveying surface facing each other. Therein the reorientating device further comprises a first actuator for controlling a distance between the first object conveyor and the second object conveyor as well as a second actuator for rotating the rotatable assembly. The controller thereof is configured to instruct the reorientating device to perform the following subsequent operations:
control a currently lower one of the conveyors of the reorientating device to accept the object from the object data capturing system;
control the first actuator to reduce the distance between the first object conveyor and the second object conveyor to clamp the object therebetween;
control the second actuator to rotate the rotatable assembly until a vertical position of the conveyors is reversed;
control the first actuator to increase the distance between the object conveyors;
control the now currently lower one of the conveyors to convey the object thereon to the object data capturing system.

In an example of these embodiments the reorientating device comprises a conveyor actuator that is arranged at a fixed position and each of the conveyors of the reorientating device has a respective transmission element for transferring a motion of the conveyor actuator as a motion of the conveyor when it is arranged below the other one of the conveyors. This is advantageous in that only one actuator is required to drive either of the conveyors that currently is in the lowest position. Furthermore the conveyor actuator is not a part of the rotatable assembly, therewith mitigating a weight thereof and allowing a faster rotation with less power.

In some embodiments the rotatable assembly has a center of gravity that coincides with its rotation axis. Also this feature contributes to a power efficient operation of the inspection system.

In an embodiment of the inspection system the rotatable assembly comprises a suspension frame provided with a respective rail at each side of the conveyors, which rails extend in a direction transverse to the rotation axis and to the conveying direction of the conveyors, and the conveyors being slidingly arranged at their sides in said rails. In this embodiment the movement of the conveyors relatively to each other is well-defined as a displacement in a single degree of freedom, being a translation towards and away from each other.

In an example of the latter embodiment, the suspension frame comprises at least one transmission loop extending around a first guiding element and a second guiding element arranged near mutually opposite ends of the suspension frame. The at least one transmission loop, which is driven by the first actuator, is fixed to the first conveyer at a first part of the transmission loop that is at a first side of an imaginary plane through the axes of both guiding elements. A second part of the transmission loop that is at a second side of the imaginary plane opposite the first side is fixed to the second conveyor.

In some embodiments of the inspection system the controller is configured to control the second actuator to invert the rotation direction each time a next object is monitored. This renders it possible that electrical connections to elements mounted on the rotatable frame can be provided as flexible cables. Otherwise these connections could be provided as sliding contacts, but the latter are more sensitive to wear.

In an embodiment of the inspection system the object data capturing system is provided as pair of a first object data capturing unit and a second object data capturing unit and the reorientating device is positioned in a path between the first and the second object data capturing unit. In this embodiment the controller is configured to subsequently instruct the first object data capturing unit of the object data capturing system to obtain first object data in the first orientation of the object to instruct the reorientating device to transfer the object arranged in its second orientation to the second object data capturing unit of the object data capturing system and to instruct the second object data capturing unit of the object data capturing system to obtain the second object data from the object in the second orientation. It is an advantage of this embodiment that objects can be inspected in a very time-efficient manner. For example, a first object may already have been inspected by the first object data capturing unit and have been reorientated for inspection by the second object data capturing unit. At the same time, the second object data capturing unit may inspect this first object, while the reorientating device reorientates a second object that has just been inspected by the first object data capturing unit and while the first object data capturing unit obtains object data from a third object.

In another embodiment the object data capturing system comprises a common object data capturing unit for obtaining the first object data of the object in its first orientation and the second object data of the object in its second orientation. In this embodiment the controller is configured to subsequently instruct the common object data capturing unit to obtain the first object data of the object in its first orientation, to cause the reorientating device to transfer the object back to the common object data capturing unit after having arranged the object in the second orientation and to instruct the common object data capturing unit to obtain the second object data from the object in the second orientation. It is an advantage of this embodiment that only one object data capturing unit is required, which is cost effective.

Various options are possible for controlling the reorientating device taking into account the size of the object to be reorientated. In some embodiments the inspection system comprises at least one sensor for providing a sense signal indicative for a tension sensed in a conveyor element of the first and or the second conveyor and the controller is configured to control the first actuator to reduce the distance between the first object conveyor and the second object conveyor to clamp the object therebetween until a tension as indicated by the sense signal has reached a threshold value. Alternatively, it may be considered to provide the first actuator with a limited power, so that it is not capable to exceed a predetermined clamping force. However, the embodiment using the tension sensor has the advantage that the threshold value can be dynamically adapted to a desired value, for example taking into account predetermined information about the object of which data is to be captured.

According to another option, the inspection system comprises a height sensor for providing an indication of a height of the object to be reorientated and the controller is configured to control the first actuator to reduce the distance between the first object conveyor and the second object conveyor to clamp the object therebetween based on the indication obtained from the height sensor prior to said controlling. In an example thereof the indication of the height of the object is comprised in the first object data obtained for the object. Hence the first (or the common) object data capturing unit serves as the height sensor, which mitigates hardware costs.

Still further it is possible to control the first actuator on a combination of information from a tension sensor and information from a height sensor.

It is noted that the inspection system may be configured to obtain object data of an object from more than two orientations. In practice it is sufficient that the combined information is obtained from two mutually different orientations. However in rare cases it may be desired to obtain additional object data, for example, if an object has concave portions that can only be monitored from a very narrow angular range. In an embodiment the inspection system is configured to identify these cases and to selectively obtain object data with the object in one or more further orientations.

According to a second aspect of the present disclosure, further an improved inspection method is provided as claimed in claim 14.

According to a third aspect of the present disclosure, also a record carrier is provided as claim 15.

### BRIEF DESCRIPTION OF THE DRAWINGS

These and other aspects are described in more detail with reference to the drawing. Therein:
FIG. 1A - 1D schematically shows subsequent operational states of a first embodiment of the inspection system;
FIG. 2A - 2D schematically shows subsequent operational states of a second embodiment of the inspection system;
FIG. 3A - 3D schematically shows subsequent operational states of a reorientating device for use in embodiments of the inspection system;
FIG. 4A - 4G shows various views of said reorientating device;
FIG. 5A - 5F shows various views of an alternative reorientating device in different operational states.

### DETAILED DESCRIPTION OF EMBODIMENTS

Like reference symbols in the various drawings indicate like elements unless otherwise indicated.

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention.

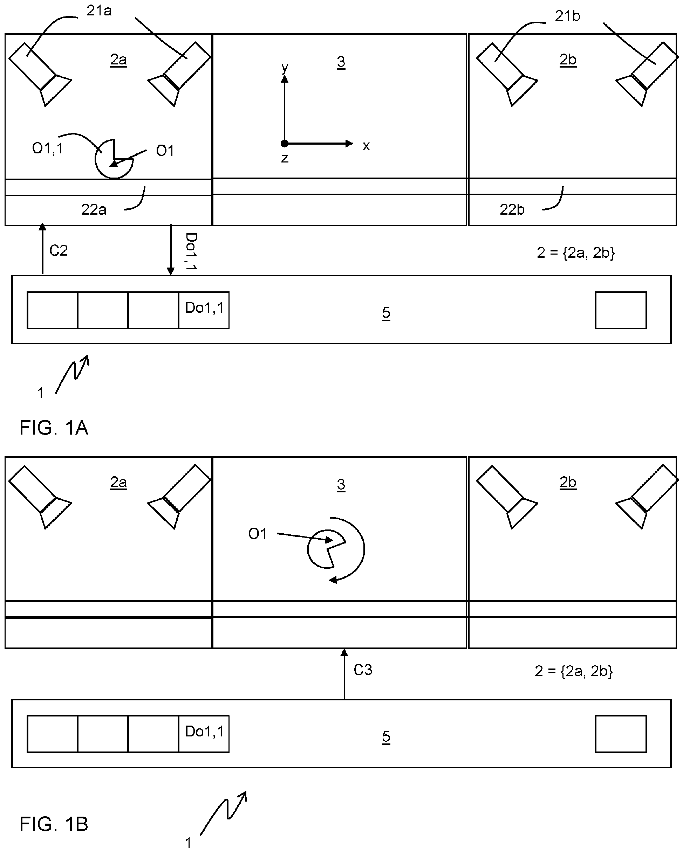

FIG. 1A - 1D schematically shows subsequent operational states of a first embodiment of the improved inspection system for inspecting 3D-objects.
As shown in FIG. 1A the embodiment of the improved inspection system 1 for inspecting 3D-objects comprises a object data capturing system with a first object data capturing unit 2a and a second object data capturing unit 2b for monitoring an object O1 to provide object data, a reorientating device 3 for reorientating the object O1 and a controller 5.

In the embodiment shown in FIG. 1A - 1D, the first object data capturing unit 2a and the second object data capturing unit 2b each comprise one or more point cloud cameras 21a, 21b respectively, to obtain a point cloud of the object to the extent that is visible in the orientation wherein it is presented to the first object data capturing unit 2a and the second object data capturing unit 2b. In each of the object data capturing units 2a, 2b a conveyor surface 22a, 22b is provided to move the object of which data is to be captured into and outside the range of the point cloud cameras.

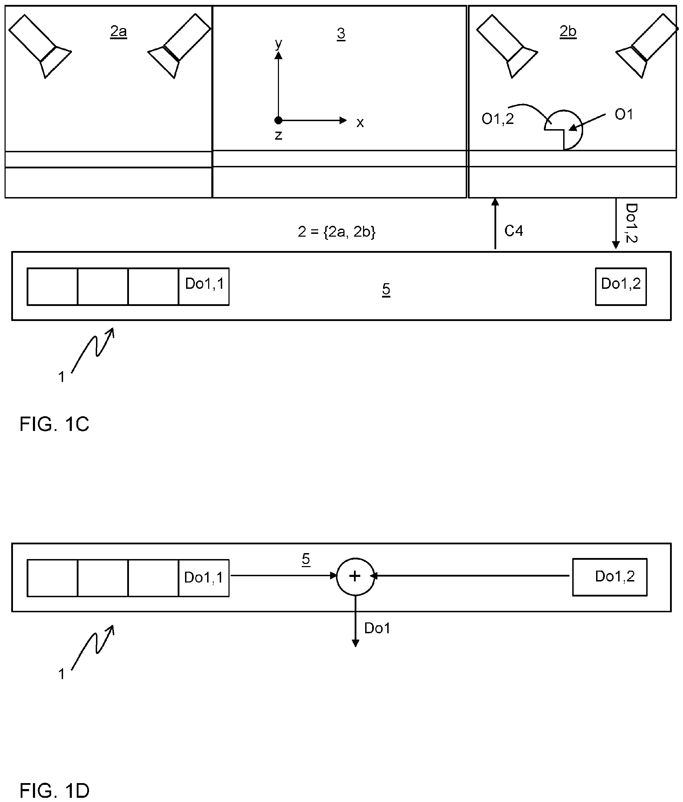

As shown in FIG. 1A, the controller 5 is configured to instruct C2 the object data capturing system, in this case the first object data capturing unit 2a thereof, to obtain first object data Do1,1 in a first orientation O1,1 of the object O1. As shown in FIG. 1B it is configured to subsequently instruct C3 the reorientating device 3 to arrange the object O1 in a second orientation 01,2 different from the first orientation. FIG. 1C shows that it is configured to subsequently instruct C4 the object data capturing system, here the second object data capturing unit 2b thereof to obtain second object data Do1,2 from the object O1 in the second orientation 01,2.

As shown in FIG. 1D the controller 5 is configured to subsequently combine C5 the first object data Do1,1 and the second object data Do1,2 into combined object data Do1 about the object O1. In an example of this combining step the controller 5 is configured to identify shared object data, being a first subset of said first object data Do1,1 and a second subset of said second object data Do1,2 representative for a same part of said object O1, and to determine an indication for a difference between said first orientation O1,1 and said second orientation 01,2 and to use said indication when combining C5 the first object data Do1,1 and the second object data Do1,2.

The point clouds defined by the first object data and by the second object data are merged in a collective point cloud that comprises all points comprised in the original point clouds transformed into a common reference coordinate system.

Standard point cloud processing libraries are available for merging point clouds obtained from different perspectives. An example thereof is provided in http://www.open3d.org/docs/release/python_api/open3d.data.DemoFeatureMatchi ngPointClouds.html?highlight=match#open3d.data.DemoFeatureMatchingPoint Clouds.

The embodiment of FIG. 1A - 1D may perform the following operations in parallel for a stream of objects O1, O2,...,Ok,...On as shown in the following table. Therein the first column shows the step of obtaining object data Dok,1 of an object Ok by the first object data capturing unit 2a, the second column shows the operations performed on an object Ok by the reorientating device 3, the third column shows the step of obtaining object data Dok,2 of an object Ok by the second object data capturing unit 2b, and the fourth column shows the operations performed by the controller 5. The operations of the reorientating device 3 are:
**Accept** Ok: the reorientating device 3 takes the object Ok from the first object data capturing unit 2a.
**Clamp** Ok: the reorientating device 3 clamps the object Ok.
**Rotate** Ok: the reorientating device 3 rotates the clamped object Ok by 180 degrees. In an example the reorientating device 3 alternates the rotation direction each time it has a clamped a new object;
**Release** Ok: the reorientating device 3 releases the rotated object, i.e the clamping force is cancelled. It is noted that the rotated object may tumble after it has been released, so that effectively it is not rotated by 180 degrees. This is not a problem as it is still possible to obtain additional object data from the object.
**Transport** Ok: the reorientating device 3 transports the object Ok to the second object data capturing unit 2b .
**Integrate** Do[k],1+Do[k],2: The controller 5 combines the object data Do[k],1, Do[k],2 obtained from the object Ok into combined object data Do[k]
**Store** Do[k],1: the controller (5) temporarily stores the first object data Do[k],1 of the object Ok, until the second object data Do[k],2 is available to be combined therewith.

| **Step** | **1^{st} object data capturing unit 2a** | **reorientating device 3** | **2^{nd} object data capturing unit 2b** | **Controller 5** |
|---|---|---|---|---|
| S1 | Obtain Do1,1 | | | |
| S2 | | Accept O1 | | Store Do1,1 |
| S3 | Obtain Do2,1; | Clamp, rotate, release O1 | | Store Do1,1 |
| S4 | | Accept O2, Transport O1 | | Store Do1,1; Store Do2,1 |
| S5 | Obtain Do3,1 | Clamp, rotate, release O2 | Obtain Do1,2 | Store Do1,1; Store Do2,1 |
| S6 | | Accept O3, Transport O2 | | Integrate |
| | | | | Do1,1+Do1,2 |
| | | | | Store Do2,1; Store Do3,1 |
| S7 | Obtain Do4,1 | Clamp, rotate, release O3 | Obtain Do2,2 | Store Do2,1; Store Do3,1 |
| S8 | | Accept O4, Transport O3 | | Integrate |
| | | | | Do2,1+Do2,2 |
| | | | | Store Do3,1; Store Do4,1 |
| .. | ... | ... | ... | |
| S2n-1 | Obtain Do[n],1, | Clamp, rotate, release On-1 | Obtain Do[n-2],2 | Store Do[n-2],1; Store Do[n-1],1 |
| S2n | | Accept On, Transport On-1 | | Integrate |
| | | | | Do[n-2],1 + Do[n-2],2 |
| | | | | Store Do[n-1],1; Store Do[n],1 |

In an exemplary embodiment each object data capturing unit 2a, 2b comprises three capturing devices, e.g. of type a Zivid Two L100, in front, above, and behind the object, and each perform three consecutive scans from mutually different angles. Therewith the first object data and the second object data each comprise point cloud data of the object from 9 different views so that the combine object data is composed of point cloud data of the object from 18 different views.

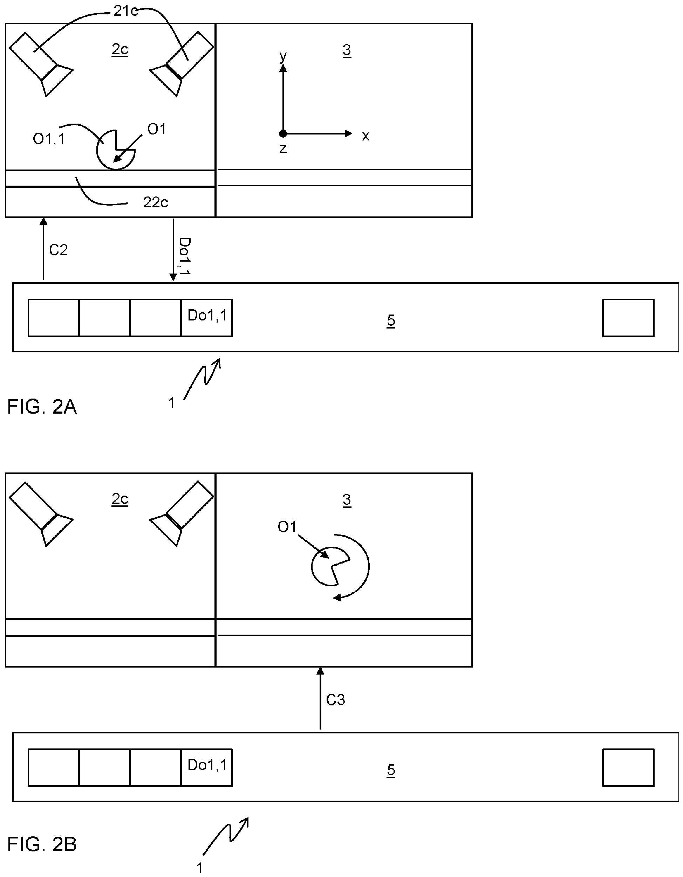

FIG. 2A - 2D schematically shows subsequent operational states of a second embodiment of the improved inspection system for inspecting 3D-objects.

As in the embodiment of FIG. 1A - 1D, the object data capturing system 2 comprises a object data capturing unit 2c with one or more point cloud cameras 21c to obtain a point cloud of a currently visible portion of the object and a conveyor surface 22c to move the object to be monitored into and outside the range of the point cloud cameras.

Contrary to the embodiment shown in FIG. 1A - 1D, in the second embodiment of the object data capturing system 2 the object data capturing unit 2c serves to obtain the first object data Do1,1 of the object O1 in its first orientation O1,1 as well as the second object data Do1,2 of the object in its second orientation O1_2. As shown in FIG. 2A, in this second embodiment the controller is configured to instruct the common object data capturing unit 2c to obtain the first object data Do1,1 of the object O1 in its first orientation O1,1.

As in the first embodiment it is configured to subsequently instruct C3 the reorientating device 3, see FIG. 2B, to arrange the object O1 in a second orientation 01,2 different from the first orientation.

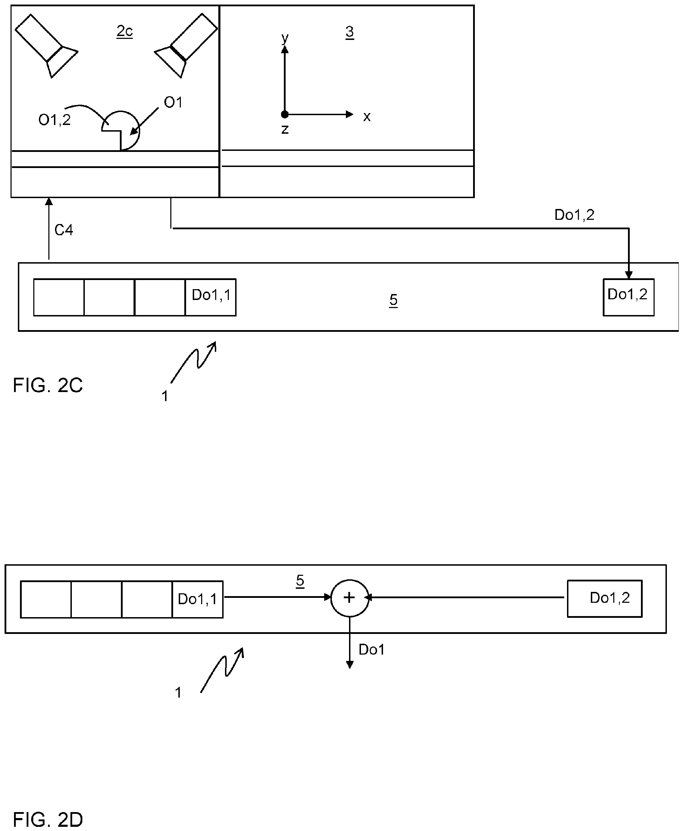

As shown in FIG. 2C, contrary to the first embodiment, it then causes the reorientating device 3 to transfer the object back to the common object data capturing unit 2c after having arranged the object O1 in the second orientation 01,2 and it then instructs C4 the common object data capturing unit 2c to obtain the second object data Do1,2 from the object O1 in the second orientation 01,2.

As shown in FIG. 2D, the controller 5 then combines C5 the first object data Do1,1 and the second object data Do1,2, both obtained with the common object data capturing unit 2c into combined object data Do1 about the object O1.

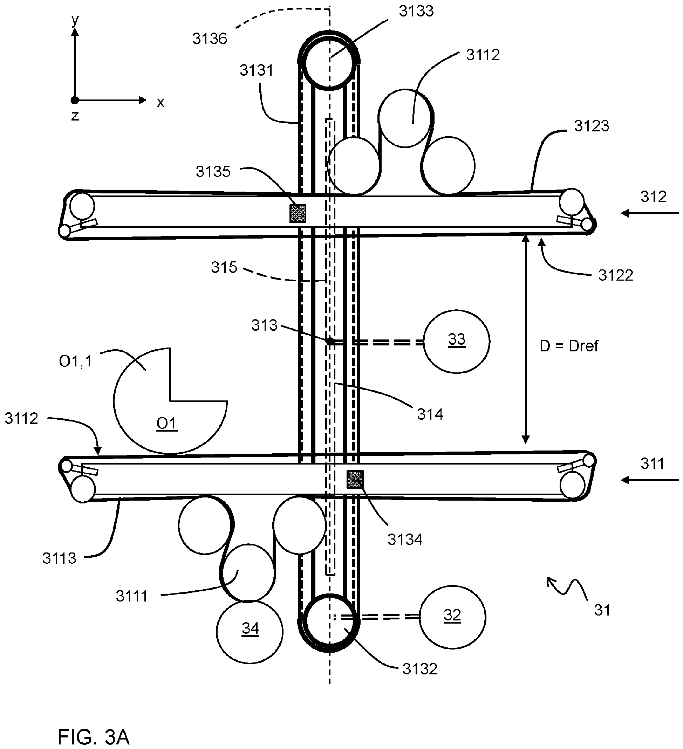

FIG. 3A - 3D shows subsequent operational states of a rotatable assembly 31 in an embodiment of the reorientating device 3.

As shown in FIG. 3A- 3D, the rotatable assembly 31 has a first object conveyor 311 with a first object conveying surface 3112 and a second object conveyor 312 with a second object conveying surface 3122. The first object conveying surface and the second object conveying surface face each other.

The reorientating device 3 comprises a conveyor actuator 34 that is arranged at a fixed position and each of the conveyors 311, 312 of the reorientating device 3 have a respective transmission element 3111, 3121 for transferring a motion of the conveyor actuator as a motion of the conveyor when it is arranged below the other one of the conveyors. The reorientating device 3 has a first actuator 32 for controlling a distance D between the first object conveyor 311 and the second object conveyor 312. In this operational state the distance D is controlled to a reference value Dref at which the transmission element 3111 of the first object conveyor 311 is mechanically coupled to the conveyor actuator 34 so that a rotation of the conveyor actuator 34 controlled by the controller 5 in a step C31 causes a displacement of the conveyor belt 3113. Therewith an object O1, that currently has a first orientation O1,1 is transferred from a neighboring conveyer of the first object data capturing unit 2a or the shared object data capturing unit 2c to a position on the first object conveying surface 3112.

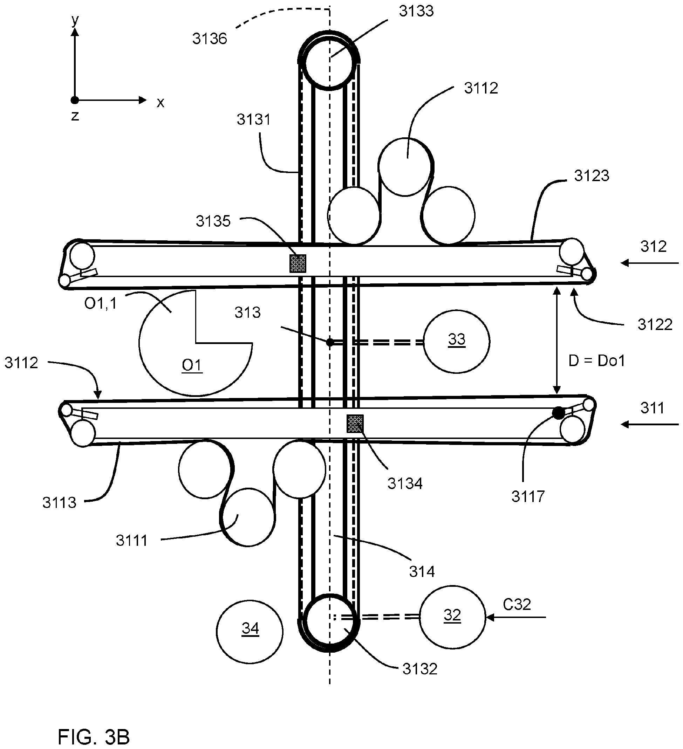

FIG. 3B shows a second operational state of the reorientating device 3. Therein the first actuator 32, controlled by the controller 5 in a step C32 has reduced the distance D between the first object conveyor 311 and the second object conveyor 312 to a value Do1 corresponding to the height of the object O1, so that the object O1 is clamped between the second object conveying surface 3122 of the second object conveyor 312 and the first object conveying surface 3112 of the first object conveyor 311.

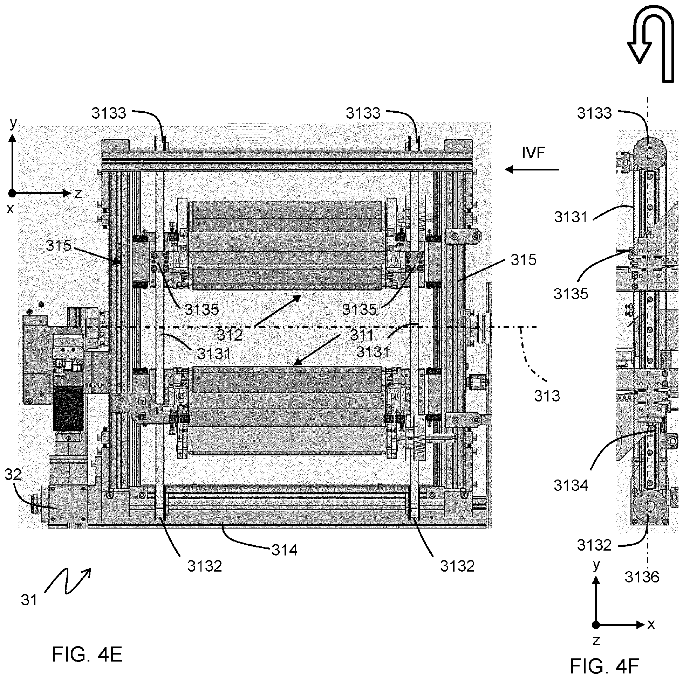

As shown in FIG. 3B, in this embodiment, the rotatable assembly 31 comprises a suspension frame 314 provided with a respective rail (315, see FIG. 4E) at each side of the conveyors 311, 312. The rails extend in a direction transverse to the rotation axis 313 and also transverse to the conveying direction of the conveyors 311, 312 and the conveyors are slidingly arranged in the rails at their sides.

As is shown further in FIG. 4E the suspension frame 314 comprises at each side a transmission loop 3131 that is driven by the first actuator 32 and that extends around a first guiding element 3132 and a second guiding element 3133 arranged near mutually opposite ends of the suspension frame 314. The transmission loop 3131 is for example provided as a toothed belt and the guiding elements as gears having corresponding tooth. In an alternative the transmission loop 3131 is formed as a chain, however the latter is more susceptible to wear.

Each of the transmission loops is fixed to the first conveyer 311 at a first part 3134 thereof that is at a first side of an imaginary plane 3136 through the axes of both guiding elements. At the opposite side of the imaginary plane 3136 the transmission loops 3131 have a second part 3135 that is fixed to the second conveyor 312.

In the operational state shown in FIG. 3B, the first actuator 32 has driven the transmission loops 3131 via the guiding elements 3132, 3133. Therewith the transmission loops 3131 have moved the first object conveyor 311 with their first part 3134 in an upward direction and have moved the second object conveyor 312 with their second part 3135 in an downward direction, until the object O1 was clamped between the object conveying surfaces 3112, 3122.

In an example the controller 5 is configured to control the first actuator 32 to reduce the distance D between the first object conveyor 311 and the second object conveyor 312 to clamp the object O1 based on an indication obtained in advance from a height sensor. The first object data capturing unit 2a or the common object data capturing unit 2c may therewith serve as the height sensor, by the deriving the indication of the height of the object O1 from the first object data Do1,1 obtained for the object O1.

In the example shown the inspection system further comprises a tension sensor 3117 that provides a sense signal indicative for a tension sensed in a conveyor element of the first and or the second conveyor. The controller is configured to control the first actuator 32 to reduce the distance D between the first object conveyor 311 and the second object conveyor 312 to clamp the object O1 therebetween until a tension as indicated by the sense signal has reached a threshold value. In this example the controller 5 uses both information from the height sensor and from the tension sensor, in that it first, at a relatively high speed, reduces the distance to a safe value based on the height indication and then at a relatively low speed further reduces the distance until the tension sensor indicates that the sense signal has reached a threshold value.

In another example a tension sensor is absent and the controller 5 uses information only from the height sensor to directly reduce the distance to the desired value. In another example the controller 5 uses information only from the tension sensor to directly reduce the distance to the desired value.

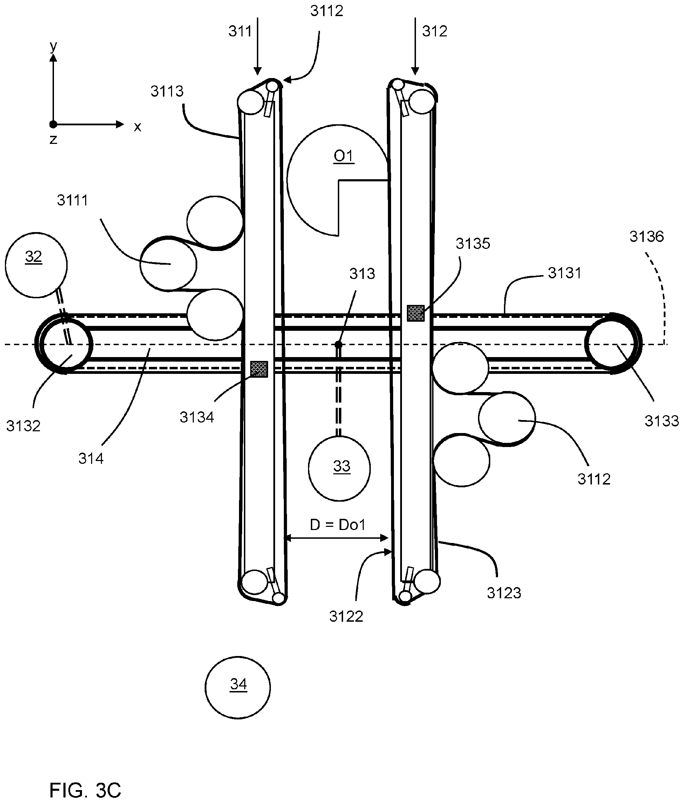

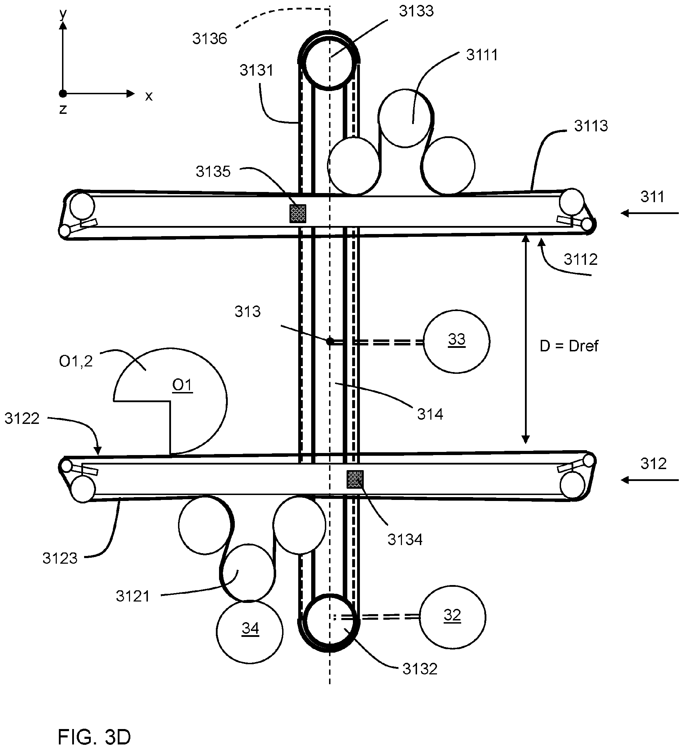

As shown in FIG. 3B, the reorientating device 3 also comprises a second actuator 33 for rotating the rotatable assembly 31. Once the object O1 is clamped, as shown in FIG. 3B, in a step C33 the controller 5 controls the second actuator 33 to rotate the rotatable assembly 31 around a rotation axis 313, until a vertical position of the conveyors is reversed as is shown in FIG. 3D. The object O1 now has an orientation 01,2 different from its original orientation O1,1. FIG. 3C shows an intermediary state. The rotatable assembly 31 has a center of gravity coincides with its rotation axis 313, so that the rotation can be performed with a minimum of electrical power and is not subject to gravitational forces.

As also shown in FIG. 3D the controller 5, in a step C34, subsequent to a completion of the rotation controls the first actuator 32 to increase the distance D between the object conveyors. As shown in FIG. 3D, the second object conveyor 312 is now the lowest one and the conveyor actuator 34 is now mechanically coupled to the conveyor belt 3123 of the second object conveyor 312 by the transmission element 3121. The controller 5 then in a step C35 controls the now currently lower one of the conveyors 312 to convey the object O1 thereon back to the object data capturing system 2 by providing a drive signal to the conveyor actuator 34. In one example as illustrated in FIG. 1A - 1D, it conveys the object O1 with the orientation 01,2 to the second object data capturing unit 2b. In another example it conveys the object O1 back to the common object data capturing unit 2c.

Upon arrival of a next object the controller 5 controls the next object conveyor 312 to accept the next object to be reorientated by inducing a translation of the object conveying surface 3122 of the second object conveyor 312 with the conveyor actuator 34 via the transmission element 3121. Once the next object is clamped it controls the second actuator 33 again to rotate the rotatable assembly 31, until a vertical position of the conveyors is reversed, however by rotating in a direction reverse to the rotation direction applied for rotating the preceding object. By reversal of the rotation direction the accumulated rotation angle of the rotatable assembly 31 never exceeds 180 degrees. Therewith the rotatable assembly 31 can be coupled with flexible connections to a reference frame in which it is rotated.

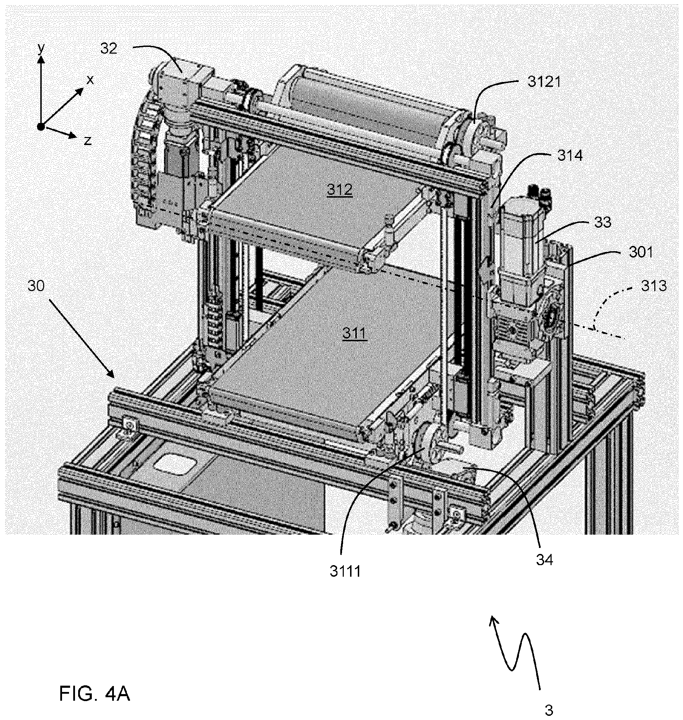

FIG. 4A - 4G shows various views of the reorientating device 3 with the rotatable assembly (indicated with reference numeral 31 in FIG. 3A - 3D) rotatably arranged around axis 313 within a fixed reference frame 30.

FIG. 4A is a perspective view from a top position.

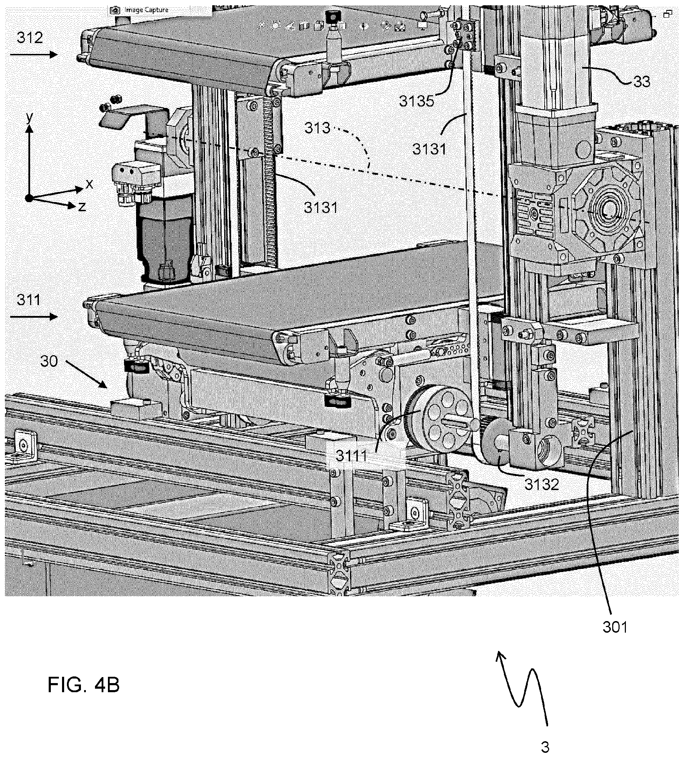

FIG. 4B is a perspective view from a side position.

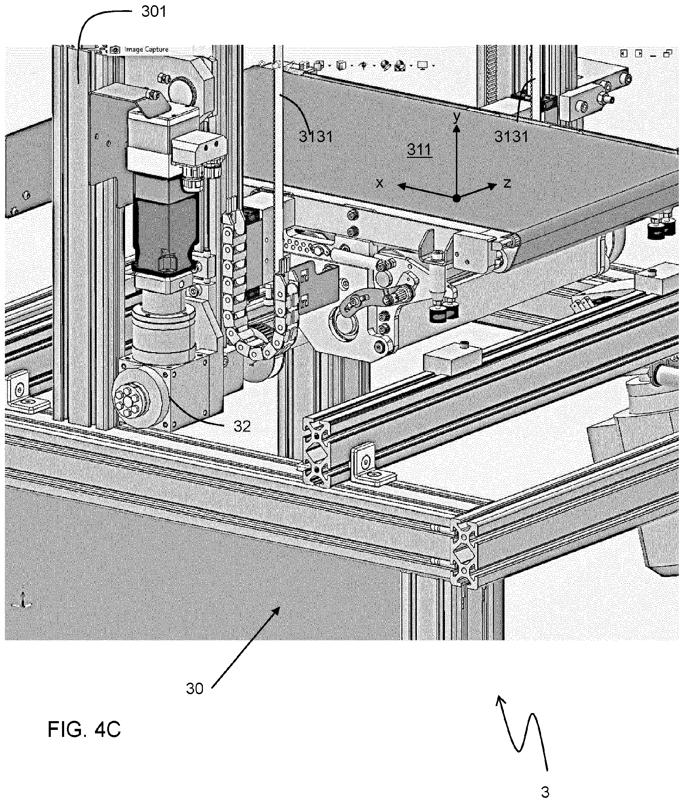

FIG. 4C is a perspective view from a side position zooming in on details of one of the conveyors 311.

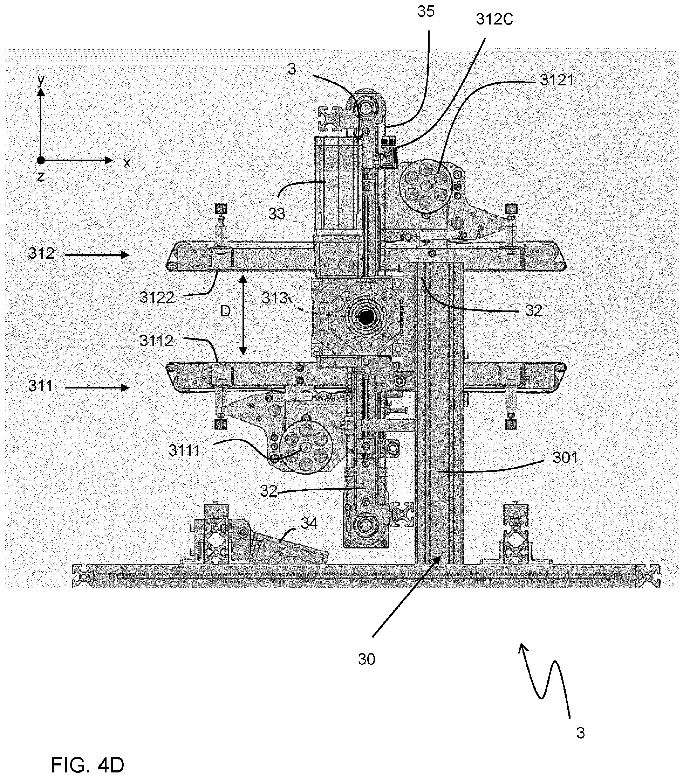

FIG. 4D is a side view with the conveyors 311, 312 moved closer towards each other.

FIG. 4E is a front view, showing in more detail how the object conveyors 311, 312 are slidingly suspended in the rails 315 of the suspension frame 314 and mechanically coupled to a respective part 3134, 3135 at a respective side of each of the transmission loops 3131. FIG. 4F is a side view according to IVF in FIG. 4E, showing the respective parts 3134, 3135 of a transmission loop 3131 at a respective side of the imaginary plane 3136 that are mechanically coupled to the first object conveyor 311 and the second object conveyor 312 respectively.

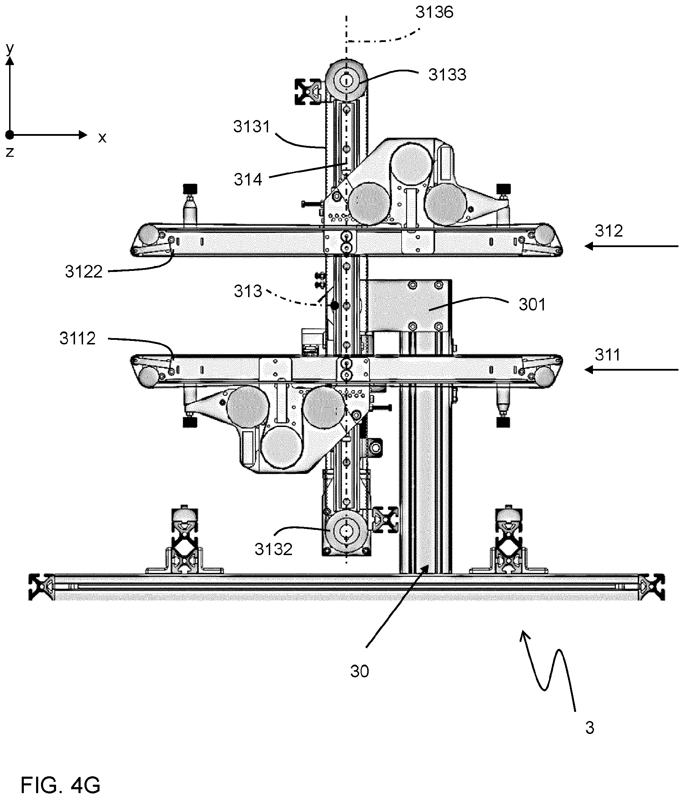

FIG. 4G shows a cross-section of the reorientating device 3 according to a plane transverse to the rotation axis 313. As shown, the suspension frame 314 is rotatably arranged, with rotation axis 313 between poles 301 of the fixed reference frame 30.

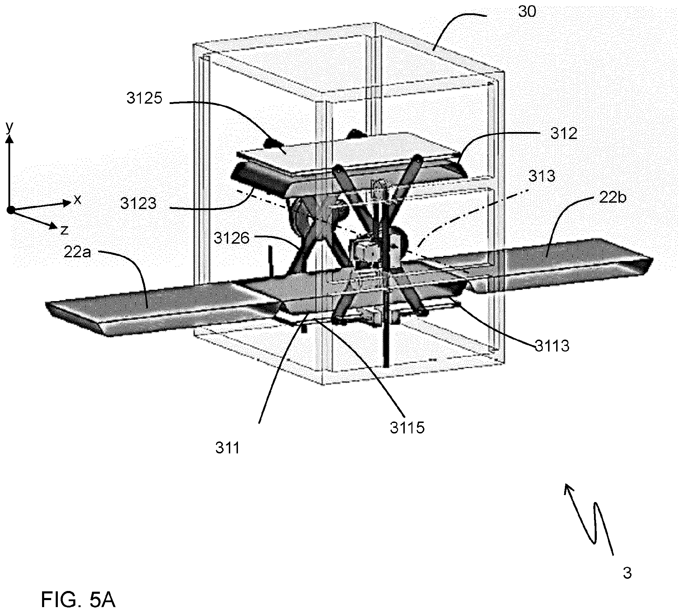

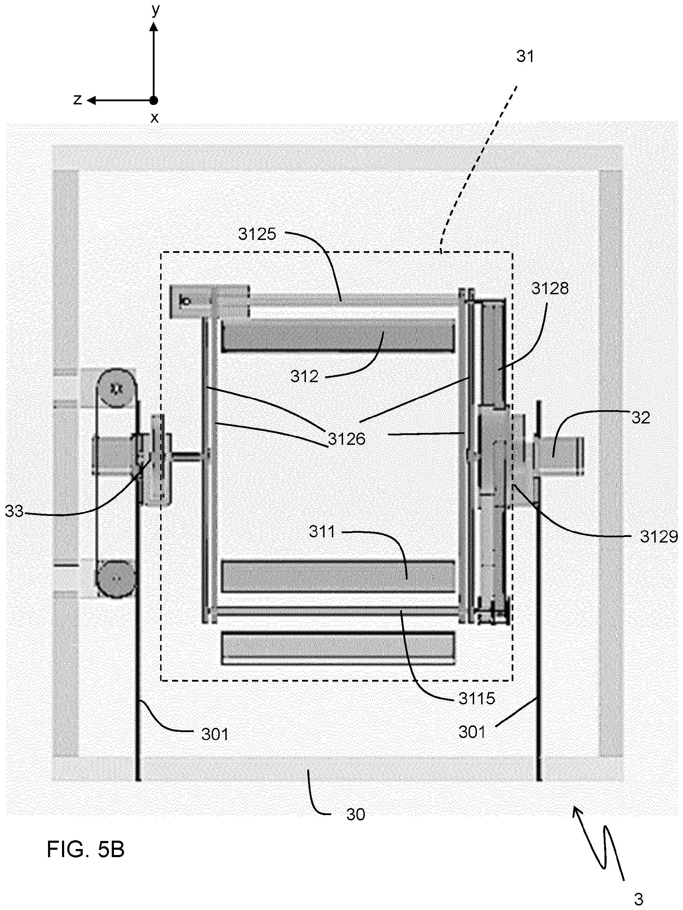

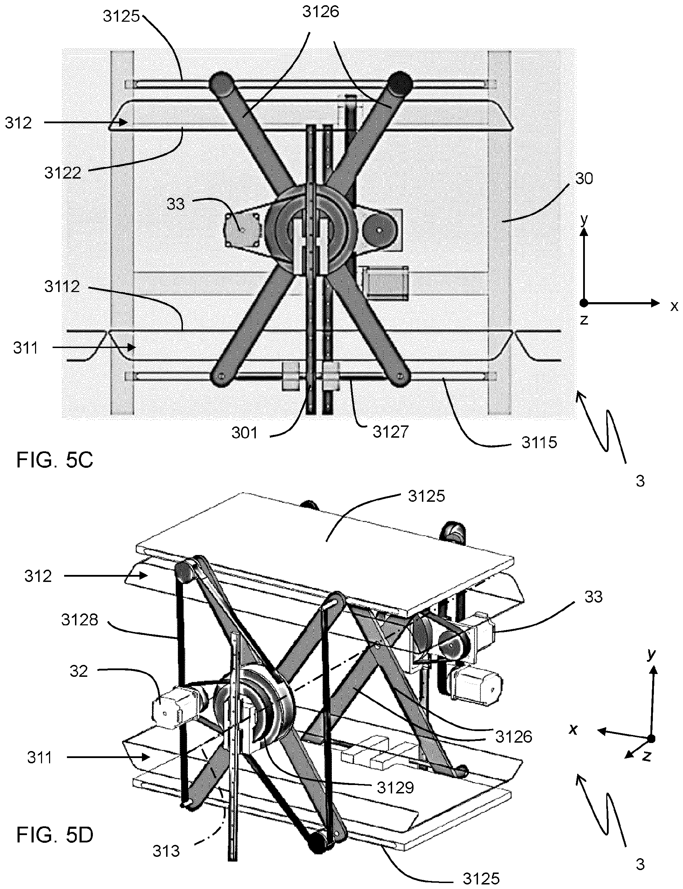

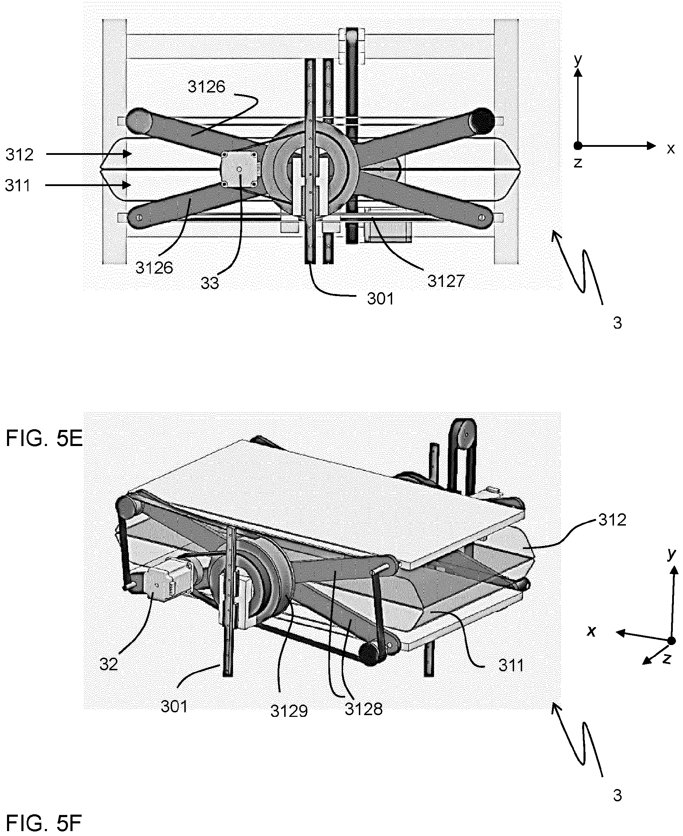

FIG. 5A - 5F show another embodiment of a reorientating device 3. FIG. 5A is a perspective view from a top position. FIG. 5B, 5C and 5D show the reorientating device 3 in a first operational state with the object conveyors 311, 312 at distance from each other. Therein FIG. 5B is a front view, FIG. 5C is a side view, and FIG. 5D is also a perspective view from a top position. FIG. 5E and 5F show the reorientating device 3 in a second operational state wherein the object conveyors 311, 312 are moved towards each other.

As in the embodiment described with reference to FIG. 3 and 4, the reorientating device 3 comprises an assembly with a first object conveyor 311 and a second object conveyor 312 having a controllable distance between their mutually opposing object conveying surfaces and the assembly is rotatable as a whole around a rotation axis 313, relative to a fixed reference frame 30. Contrary to the previously described embodiment, the conveyors are movably arranged with respect to each other through a pair of mutually crossing support legs 3126 at each side. The support legs 3126 of a pair are rotatable relative to each other around the rotation axis 313 of the assembly and each of their ends is slidably coupled to a respective conveyor carrier 3115, 3125 of a respective object conveyor 311, 312. As can be best seen in FIG. 5C, at a first side the ends of the support legs 3126 are biased towards each other by a spring 3127. Therewith the object conveyors 311, 312 are biased away from each other. As can best be seen in FIG. 5D, the first actuator 32 is configured to rotate a drum 3129 to which a pair of belts 3128 is fixed. One of these belts 3128 is fixed at an opposing end to an end of one of the support legs 3126 that is slidably coupled to the conveyor carrier 3125 of the first object conveyor 311 and slidably guided via an end of the other one of the support legs 3126 that is slidably coupled to the conveyor carrier 3125 of the second object conveyor 312. The other one of the belts 3128 is arranged in a complementary way. Upon rotating the drum 3129 in a clockwise direction by the first actuator 32 the belts pull the object conveyors 311, 312 towards each other. Therewith the object conveyors remain symmetrically arranged with respect to the rotation axis 313 so that also the center of gravity remains at the rotation axis. Therewith the reorientating device 3 assumes the second operational state illustrated in FIG. 5E, 5F. In the situation shown in FIG. 5E, 5F the object conveyors 311, 312 are clamped against each other. In practice the controller 5 of the inspection system 1 will stop the rotation when the object conveyors 311, 312 are at a distance at which the object to be arranged is properly clamped between the object conveyors 311, 312. In this operational state the assembly of object conveyors 311, 312 with the object clamped therebetween is rotated 180 degrees by the action of the second actuator 33 and subsequently, the first actuator 32 reversely drives the drum 3129 so that the belts 3128 are unwinded and the object conveyors 311, 312 are moved apart from each other by the force of the spring 3127.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. An inspection system (1) for inspecting 3D-objects, the system comprising:
an object data capturing system (2; 2a, 2b, 2c) for capturing object data of an object (O1);
a reorientating device (3) for reorientating the object (O1);
a controller (5) configured to:
instruct (C2) the object data capturing system (2c; 2a) to obtain first object data (Do1,1) in a first orientation (O1,1) of the object (O1);
instruct (C3) the reorientating device (3) to orientate the object (O1) in a second orientation (O1,2) different from the first orientation;
instruct (C4) the object data capturing system (2c; 2b) to obtain second object data (Do1,2) from the object (O1) in the second orientation (01,2);
combine (C5) the first object data (Do1,1) and the second object data (Do1,2) into combined object data (Do1) about the object (O1).

2. The inspection system according to claim 1, wherein the controller (5) is configured to identify shared object data, being a first subset of said first object data (Do1,1) and a second subset of said second object data (Do1,2) representative for a same part of said object (O1), and to determine an indication for a difference between said first orientation (O1,1) and said second orientation (O1,2) and to use said indication when combining (C5) the first object data (Do1,1) and the second object data (Do1,2).

3. The inspection system according to claim 1 or 2, wherein the reorientating device (3) comprises:
a rotatable assembly (31) with a first object conveyor (311) with a first object conveying surface (3112) and a second object conveyor (312) with a second object conveying surface (3122), with the first object conveying surface and the second object conveying surface facing each other;
a first actuator (32) for controlling a distance (D) between the first object conveyor (311) and the second object conveyor (312);
a second actuator (33) for rotating the rotatable assembly (31);
wherein the controller (5) is configured to instruct (C3) the reorientating device to:
control (C31) a currently lower one of the conveyors (311) of the reorientating device (3) to accept the object (O1) from the object data capturing system (2);
control (C32) the first actuator (32) to reduce the distance (D) between the first object conveyor (311) and the second object conveyor (312) to clamp the object (O1) therebetween;
control (C33) the second actuator (33) to rotate the rotatable assembly (31) until a vertical position of the conveyors is reversed;
control (C34) the first actuator (32) to increase the distance (D) between the object conveyors;
control (C35) the now currently lower one of the conveyors (312) to convey the object (O1) thereon to the object data capturing system (2).

4. The inspection system according to claim 3, wherein the reorientating device (3) comprises a conveyor actuator (34) that is arranged at a fixed position and that each of the conveyors (311, 312) of the reorientating device (3) have a respective transmission element (3111, 3121) for transferring a motion of the conveyor actuator as a motion of the conveyor when it is arranged below the other one of the conveyors.

5. The inspection system according to claim 2, 3 or 4, the rotatable assembly (31) has a center of gravity that coincides with its rotation axis (313).

6. The inspection system according to claim 2, 3, 4 or 5, wherein the rotatable assembly (31) comprises a suspension frame (314) provided with a respective rail (315) at each side of the conveyors (311, 312), which rails extend in a direction transverse to the rotation axis and to the conveying direction of the conveyors, and the conveyors being slidingly arranged at their sides in said rails.

7. The inspection system according to claim 6, wherein the suspension frame (314) comprises at least one transmission loop (3131) extending around a first guiding element (3132) and a second guiding element (3133) arranged near mutually opposite ends of the suspension frame, the at least one transmission loop being fixed to the first conveyer (311) at a first part (3134) of the transmission loop that is at a first side of an imaginary plane (3136) through the axes of both guiding elements and a second part (3135) of the transmission loop that is at a second side of said imaginary plane opposite the first side is fixed to the second conveyor (312), the at least one transmission loop being driven by the first actuator (32).

8. The inspection system according to any of the claims 2 - 7, wherein the controller (5) is configured to control the second actuator (33) to invert the rotation direction each time object data is captured from a next object.

9. The inspection system according to any of the preceding claims, wherein the object data capturing system (2) comprises a first object data capturing unit (2a) and a second object data capturing unit (2b) wherein the reorientating device (3) is positioned in a path between the first object data capturing unit (2a) and the second object data capturing unit (2b), and wherein the controller (5) is configured to:
instruct (C2) the first object data capturing unit (2a) of the object data capturing system (2) to obtain first object data (Do1,1) in the first orientation (O1,1) of the object (O1);
instruct (C3) the reorientating device (3) to transfer the object (O1) arranged in its second orientation (O1_2) to the second object data capturing unit (2b) of the object data capturing system (2);
instruct (C4) the second object data capturing unit (2b) of the object data capturing system to obtain the second object data (Do1,2) from the object (O1) in the second orientation (O1,2).

10. The inspection system according to any of the claims 1-8, wherein the object data capturing system (2) comprises a common object data capturing unit (2c) for obtaining the first object data (Do1,1) of the object (O1) in its first orientation (O1,1) and the second object data (Do 1,2) of the object in its second orientation (O1_2), wherein the controller is configured to:
instruct the common object data capturing unit (2c) to obtain the first object data (Do1,1) of the object (O1) in its first orientation (O1,1);
cause the reorientating device (3) to transfer the object back to the common object data capturing unit (2c) after having arranged the object (O1) in the second orientation (01,2);
instruct (C4) the common object data capturing unit (2c) to obtain the second object data (Do1,2) from the object (O1) in the second orientation (O1,2).

11. The inspection system according to any of the claims 3-10, comprising at least one sensor for providing a sense signal indicative for a tension sensed in a conveyor element of the first and or the second conveyor wherein the controller is configured to control the first actuator (32) to reduce the distance (D) between the first object conveyor (311) and the second object conveyor (312) to clamp the object (O1) therebetween until a tension as indicated by the sense signal has reached a threshold value.

12. The inspection system according to any of the claims 3-10, comprising a height sensor for providing an indication of a height of the object (O1) and wherein the controller is configured to control the first actuator (32) to reduce the distance (D) between the first object conveyor (311) and the second object conveyor (312) to clamp the object (O1) therebetween based on the indication obtained from the height sensor prior to said controlling.

13. The inspection system according to claim 12, wherein the indication of the height of the object (O1) is comprised in the first object data (Do1,1) obtained for the object (O1).

14. A method for inspecting 3D-objects, the method comprising:
obtaining first object data (Do1,1) of an object (O1) in a first orientation (O1,1);
arranging the object (O1) in a second orientation (O1,2) different from the first orientation;
obtaining second object data (Do1,2) from the object (O1) in the second orientation (01,2);
combining (C5) the first object data (Do1,1) and the second object data (Do1,2) into combined object data (Do1) about the object (O1).

15. A record carrier storing a computer program having instructions that causes the inspection system (1) of claim 1 to perform the method of claim 14.
